# EUROPÄISCHE PATENTSCHRIFT

(11) **EP 3 154 834 B1**
(45) Veröffentlichungstag und Bekanntmachung des Hinweises auf die Patenterteilung: **22.08.2018**
(21) Anmeldenummer: 15713903.1
(22) Anmeldetag: 07.04.2015
(51) Int. Cl.: B60T 8/44, B60T 13/74, B60T 17/22

(54) **HYDRAULIKSTEUERGERÄT FÜR ZUMINDEST EIN HYDRAULIKAGGREGAT EINES BREMSSYSTEMS UND BREMSKRAFTVERSTÄRKERSTEUERGERÄT FÜR EINEN ELEKTROMECHANISCHEN BREMSKRAFTVERSTÄRKER EINES BREMSSYSTEMS**
HYDRAULIC CONTROL UNIT FOR AT LEAST ONE HYDRAULIC UNIT OF A BRAKE SYSTEM AND BRAKE BOOSTER CONTROL UNIT FOR AN ELECTROMECHANICAL BRAKE BOOSTER OF A BRAKE SYSTEM
DISPOSITIF DE COMMANDE HYDRAULIQUE POUR AU MOINS UNE UNITÉ HYDRAULIQUE D'UN SYSTÈME DE FREINAGE ET DISPOSITIF DE COMMANDE DE SERVOFREIN POUR SERVOFREIN ÉLECTROMÉCANIQUE D'UN SYSTÈME DE FREINAGE

(30) Priorität: 10.06.2014 DE 102014210998
(43) Veröffentlichungstag der Anmeldung: 19.04.2017
(73) Patentinhaber: Robert Bosch GmbH, 70442 Stuttgart (DE)
(72) Erfinder: SCHAEFER, Patrick Christian, 71638 Ludwigsburg (DE); FOITZIK, Bertram, 74360 Ilsfeld (DE)
(86) Internationale Anmeldenummer: PCT/EP2015/057447
(87) Internationale Veröffentlichungsnummer: WO 2015/188957

(56) Entgegenhaltungen:
- DE-A1-102009 056 765
- DE-C1- 19 947 750
- US-A1- 2012 053 803
- US-A1- 2014 095 044

## Beschreibung

Die Erfindung betrifft ein Hydrauliksteuergerät für zumindest ein Hydraulikaggregat eines Bremssystems und ein Hydraulikaggregat für ein Bremssystem. Ebenso betrifft die Erfindung ein Bremskraftverstärkersteuergerät für einen elektromechanischen Bremskraftverstärker eines Bremssystems und einen elektromechanischen Bremskraftverstärker für ein Bremssystem. Des Weiteren betrifft die Erfindung ein Bremssystem für ein Fahrzeug.

### Stand der Technik

In der DE 10 2010 043 203 A1 sind ein Bremskraftverstärker und ein Verfahren zum Betrieb eines Bremskraftverstärkers beschrieben. Wie in den Figuren bildlich wiedergegeben ist, ist der Bremskraftverstärker als elektromechanischer Bremskraftverstärker ausgebildet. Zum Ansteuern des elektromechanischen Bremskraftverstärkers kann ein Bremskraftverstärkersteuergerät eingesetzt werden. Das Bremskraftverstärkersteuergerät kann zusätzlich mit einem Hydrauliksteuergerät für zumindest ein Hydraulikaggregat eines Bremssystems zusammenwirken.

Dokument DE102013219589 A1 offenbart eine Fahrzeugsteuervorrichtung gemäß dem Oberbegriff des Anspruchs 1.

### Offenbarung der Erfindung

Die Erfindung schafft ein Hydrauliksteuergerät für zumindest ein Hydraulikaggregat eines Bremssystems mit den Merkmalen des Anspruchs 1, ein Hydraulikaggregat für ein Bremssystem mit den Merkmalen des Anspruchs 5, ein Bremskraftverstärkersteuergerät für einen elektromechanischen Bremskraftverstärker eines Bremssystems mit den Merkmalen des Anspruchs 6, einen elektromechanischen Bremskraftverstärker für ein Bremssystem mit den Merkmalen des Anspruchs 12 und ein Bremssystem für ein Fahrzeug mit den Merkmalen des Anspruchs 14.

### Vorteile der Erfindung

Die vorliegende Erfindung schafft eine vorteilhafte Funktionstrennung zwischen dem Hydrauliksteuergerät und dem damit zusammenwirkenden Bremskraftverstärkersteuergerät. Insbesondere schafft die vorliegende Erfindung ein Master-Slave-Konzept zum Zusammenwirken des Hydrauliksteuergeräts und des Bremskraftverstärkersteuergeräts, wobei das Hydrauliksteuergerät den Master-Status und das Bremskraftverstärkersteuergerät den Slave-Status übernimmt. Das im Slave-Status betriebene Bremskraftverstärkersteuergerät kann seine Funktionsweise damit so schnell an die aktuelle Betätigung des Bremsbetätigungselements durch einen Fahrer des mit dem jeweiligen Bremssystem ausgestatteten Fahrzeugs und an den aktuellen Betrieb des Hydrauliksteuergeräts im Master-Status anpassen, dass für den Fahrer ein angenehmes Bremsbetätigungsgefühl (Pedalgefühl) gewährleistet ist. Insbesondere ist selbst bei Verblendvorgängen (welche in der Regel durch das Hydrauliksteuergerät ausgeführt werden) gewährleistet, dass der Fahrer von einem aktuell ausgeführten Verblendvorgang beim Betätigen des Bremsbetätigungselement nichts bemerkt. Die vorliegende Erfindung trägt somit auch zur Verbesserung eines Bremskomforts für den Fahrer bei.

In einer vorteilhaften Ausführungsform weist das Hydrauliksteuergerät mindestens einen ersten Datenleitungsanschluss auf, an welchem mindestens eine Datenleitung derart anbindbar oder angebunden ist, dass das Hydrauliksteuergerät über die mindestens eine Datenleitung mit dem Bremskraftverstärkersteuergerät verbindbar oder verbunden ist. Entsprechend kann auch das Bremskraftverstärkersteuergerät mindestens einen zweiten Datenleitungsanschluss aufweisen, an welchem die mindestens eine Datenleitung derart anbindbar oder angebunden ist, dass das Bremskraftverstärkersteuergerät über die mindestens eine Datenleitung mit dem Hydrauliksteuergerät verbindbar oder verbunden ist. Die erfindungsgemäße Verbindung des Hydrauliksteuergeräts mit dem Bremskraftverstärkersteuergerät über die mindestens eine Datenleitung ist in der Regel schneller als eine herkömmliche Anbindung der beiden Steuergeräte an einen CAN-, I²C- oder Flexray-Datenbus. Somit realisiert die vorliegende Erfindung eine signifikant schnellere Kommunikation zwischen dem Hydrauliksteuergerät und dem Bremskraftverstärkersteuergerät.

Vorzugsweise ist das Bremskraftverstärkersteuergerät dazu ausgelegt, unter Berücksichtigung mindestens eines Sensorsignals mindestens eines Bremsbetätigungssensors die zumindest eine Bremsbetätigungsstärke-Größe über die mindestens eine Datenleitung an das Hydrauliksteuergerät bereitzustellen. Z.B. können die Daten des mindestens einen Bremsbetätigungssensors auch per SPI oder USB zum Hydrauliksteuergerät gesendet werden. Dies ist deutlich schneller als eine herkömmliche Datenübertragung von dem mindestens einen Bremsbetätigungssensors zu dem Hydrauliksteuergerät über einen CAN-, I²C- oder der Flexray-Datenbus.

In einer weiteren vorteilhaften Ausführungsform weist das Hydrauliksteuergerät einen ersten Taktsynchronisationsleitungsanschluss auf, an welchem eine Taktsynchronisationsleitung derart anbindbar oder angebunden ist, dass das Hydrauliksteuergerät über die Taktsynchronisationsleitung mit dem Bremskraftverstärkersteuergerät verbindbar oder verbunden ist. Entsprechend kann auch das Bremskraftverstärkersteuergerät einen zweiten Taktsynchronisationsleitungsanschluss aufweisen, an welchem die Taktsynchronisationsleitung derart anbindbar oder angebunden ist, dass das Bremskraftverstärkersteuergerät über die Taktsynchronisationsleitung mit dem Hydrauliksteuergerät verbindbar oder verbunden ist. In diesem Fall ist auch eine Zeitsynchronisation zwischen den beiden Steuergeräten ausführbar.

In einer bevorzugten Ausführungsform ist das Bremskraftverstärkersteuergerät auf das Hydrauliksteuergerät synchronisierbar. Dies ermöglicht das beide Steuergeräte übergreifende Master-Slave-Konzept.

In einer vorteilhaften Weiterbildung ist die erste Ansteuerelektronik zusätzlich dazu ausgelegt, bei einer Funktionsbeeinträchtigung und/oder einem Funktionsausfall des Bremskraftverstärkersteuergeräts und/oder des elektromechanischen Bremskraftverstärkers das mindestens eine Ventil und/oder den mindestens einen Pumpenmotor zum Ausführen einer Bremskraftverstärkung anzusteuern. Somit können das Hydrauliksteuergerät, das mindestens eine Ventil und/oder der mindestens eine Pumpenmotor den Fahrer beim Aufbauen eines Bremsdrucks in mindestens einem Radbremszylinder seines Bremssystems kraftmäßig unterstützen. Der Fahrer hat deshalb trotz der Funktionsbeeinträchtigung/des Funktionsausfalls des Bremskraftverstärkersteuergeräts und/oder des elektromechanischen Bremskraftverstärkers noch ein angenehmes Bremsbetätigungsgefühl (Pedalgefühl).

Als Alternative oder als Ergänzung dazu kann die zweite Ansteuerelektronik bei einer Funktionsbeeinträchtigung und/oder einem Funktionsausfall des Hydrauliksteuergeräts aus dem Normalmodus in einen Überbrückungsmodus überführbar sein, wobei die zweite Ansteuerelektronik in dem Überbrückungsmodus dazu ausgelegt ist, unter Berücksichtigung zumindest der zumindest einen Bremsbetätigungsstärke-Größe und/oder des mindestens einen Sensorsignals die zumindest eine Motorsollgröße selbst festzulegen. Die Bremskraftverstärkung kann somit auch alleine mittels des Bremskraftverstärkersteuergeräts aufrechterhalten werden. Die dazu erforderliche Software kann im Bremskraftverstärkersteuergerät ohne eine (signifikante) Steigerung eines Bauraumbedarfs der zweiten Ansteuerelektronik enthalten sein. Durch das Überführen des Bremskraftverstärkersteuergeräts in den Überbrückungsmodus ist die Software aktivierbar.

Die vorausgehend beschriebenen Vorteile des Hydrauliksteuergeräts sind auch bei einem Hydraulikaggregat für ein Bremssystem mit einem entsprechenden Hydrauliksteuergerät gewährleistet.

Auch die oben beschriebenen Vorteile des Bremskraftverstärkersteuergeräts sind durch einen elektromechanischen Bremskraftverstärker für ein Bremssystem mit einem derartigen Bremskraftverstärkersteuergerät realisierbar.

In einer bevorzugten Ausführungsform des elektromechanischen Bremskraftverstärkers ist das Bremskraftverstärkersteuergerät in einem Deckel des Motors des elektromechanischen Bremskraftverstärkers verbaut. Das Bremskraftverstärkersteuergerät ist somit auf einfache Weise und platzsparend in dem elektromechanischen Bremskraftverstärker integrierbar.

Des Weiteren schafft auch ein Bremssystem für ein Fahrzeug mit zumindest einem entsprechenden Hydrauliksteuergerät und einem derartigen Bremskraftverstärkersteuergerät die oben schon erläuterten Vorteile.

Beispielsweise können das Hydrauliksteuergerät oder das damit ausgestattete Hydraulikaggregat zumindest ein erstes Gehäuse aufweisen in und/oder an welchem zumindest die erste Ansteuerelektronik integriert ist, wobei das Bremskraftverstärkersteuergerät oder der damit ausgestattete elektromechanische Bremskraftverstärker zumindest ein zweites Gehäuse aufweisen, in und/oder an welchem zumindest die zweite Ansteuerelektronik integriert ist. Das Hydrauliksteuergerät und das damit zusammenwirkende Bremskraftverstärkersteuergerät sind somit als zwei getrennt ausgebildete Bauteile des Bremssystems realisierbar.

### Kurze Beschreibung der Zeichnungen

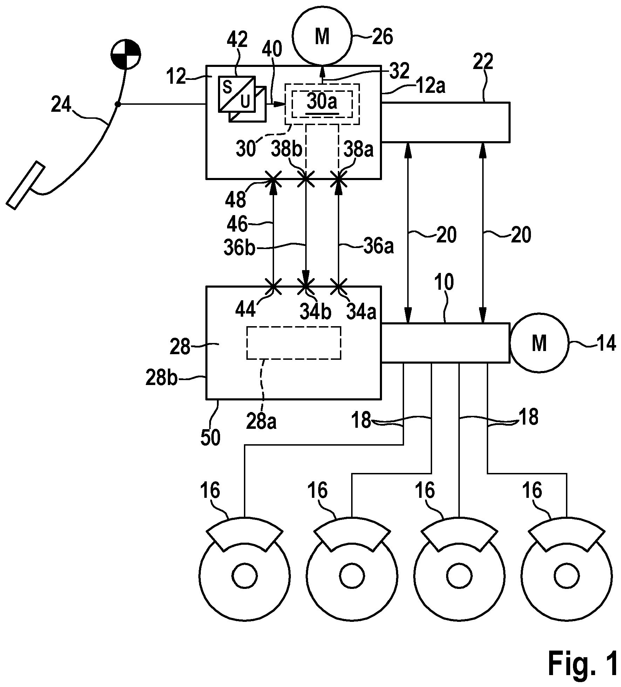

Weitere Merkmale und Vorteile der vorliegenden Erfindung werden nachfolgend anhand der Fig. 1 erläutert, welche schematische Darstellungen von Ausführungsformen des Hydrauliksteuergeräts und des Bremskraftverstärkersteuergeräts zeigt.

### Ausführungsformen der Erfindung

Fig. 1 zeigt schematische Darstellungen von Ausführungsformen des Hydrauliksteuergeräts und des Bremskraftverstärkersteuergeräts.

Das in Fig. 1 schematisch wiedergegebene Bremssystem ist in einem Fahrzeug/Kraftfahrzeug, wie z.B. einem Elektro- oder Hybridfahrzeug, einsetzbar. Die Einsetzbarkeit des Bremssystems ist nicht auf einen bestimmten Fahrzeugtyp limitiert.

Das Bremssystem ist zumindest mit einem Hydraulikaggregat 10 und mit einem elektromechanischen Bremskraftverstärker 12 ausgestattet. Unter dem Hydraulikaggregat 10 kann auch ein Hydraulikblock, ein ABS-System (Antiblockiersystem) und/oder ein ESP-System (System für eine Fahrdynamikregelung/ein elektronisches Stabilitätsprogramm) verstanden werden. Das Hydraulikaggregat 10 kann mit mindestens einem (nicht skizzierten) Ventil und/oder mit mindestens einem Pumpenmotor 14 mindestens einer Pumpe ausgestattet sein. Lediglich beispielhaft weist das Bremssystem der Fig. 1 vier Radbremszylinder 16 auf, welche (über Hydraulikleitungen 18) an dem Hydraulikaggregat 10 angebunden sind. Außerdem ist das Hydraulikaggregat 10 (über weitere Hydraulikleitungen 20) an einem Hauptbremszylinder 22 des Bremssystems angebunden. Wie mittels der lediglich schematischen Darstellung der Komponenten 16 bis 22 des Bremssystems wiedergegeben, ist unter dem Hydraulikaggregat 10 nicht ein bestimmter Hydraulikaggregattyp zu verstehen. Stattdessen kann das Bremssystem mit einer Vielzahl verschiedener Ausführungsbeispiele für das Hydraulikaggregat 10 ausgestattet sein.

Auch unter dem elektromechanischen Bremskraftverstärker 12, welcher beispielhaft zwischen einem Bremsbetätigungselement 24, wie z.B. einem Bremspedal 24, und dem Hauptbremszylinder 22 angeordnet ist, ist kein bestimmter Bremsverstärkertyp zu verstehen. Stattdessen kann jeder mit einem (elektrischen) Motor 26 ausgestattete Bremskraftverstärkertyp als der elektromechanische Bremskraftverstärker 12 eingesetzt werden.

Das Bremssystem der Fig. 1 weist außerdem noch zumindest ein Hydrauliksteuergerät 28 und ein Bremskraftverstärkersteuergerät 30 auf. Das Hydrauliksteuergerät 28 umfasst eine erste Ansteuerelektronik 28a, mittels welcher mindestens ein (nicht skizziertes) Ventilsteuersignal an das mindestens eine Ventil des Hydraulikaggregats 10 und/oder des Bremssystems und/oder mindestens ein (nicht dargestelltes) Pumpenmotorsteuersignal an den mindestens einen Pumpenmotor 14 der mindestens einen Pumpe des Hydraulikaggregats 10 und/oder des Bremssystems ausgebbar sind.

Beispielsweise kann das Hydrauliksteuergerät 28 dazu ausgelegt sein, das mindestens eine Ventil und/oder den mindestens einen Pumpenmotor 14 derart anzusteuern, dass eine Automatische Blockierverhinderung (ABS-Funktion) und/oder eine Fahrdynamikregelung/ein Elektronisches Stabilitätsprogramm (ESP/ESC, Electronic Stability Control) ausführbar sind. Alternativ oder ergänzend können das mindestens eine Ventil und/oder der mindestens eine Pumpenmotor 14 mittels des Hydrauliksteuergeräts 28 auch derart ansteuerbar sein, dass durch einen Bremsflüssigkeitstransfer der mindestens eine in den Radbremszylindern 16 vorliegende Bremsdruck so steigerbar oder reduzierbar ist, dass ein zum rekuperativen Bremsen des Fahrzeugs gleichzeitig bewirktes zeitlich variierendes Generator-Bremsmoment eines (nicht skizzierten) Generators verblendbar ist.

Außerdem ist die erste Ansteuerelektronik 28a dazu ausgelegt, zumindest eine von dem Motor 26 des elektromechanischen Bremskraftverstärkers 12 auszuführende Motorsollgröße festzulegen. Das Festlegen der zumindest einen auszuführenden Motorsollgröße erfolgt unter Berücksichtigung zumindest einer bereitgestellten Bremsbetätigungsstärke-Größe bezüglich einer Bremsbetätigungsstärke einer aktuellen Betätigung des an dem Bremssystem angebundenen Bremsbetätigungselements 24 (durch einen Fahrer). Die zumindest eine von der ersten Ansteuerelektronik 28a festgelegte Motorsollgröße kann beispielsweise ein an den Motor 26 des elektromechanischen Bremskraftverstärkers 12 bereitzustellender Motorstrom, eine an den Motor 26 des elektromechanischen Bremskraftverstärkers 12 anzulegende Motorspannung, ein Motor-Soll-Drehwinkel, eine Soll-Winkelgeschwindigkeit des Motors 26, eine Soll-Drehzahl des Motors 26 und/oder ein (auszuführender) Soll-Modus des Motors 26 des elektromechanischen Bremskraftverstärkers 12 sein. Außerdem ist die erste Ansteuerelektronik 28a dazu ausgelegt, ein der zumindest einen festgelegten Motorsollgröße entsprechendes Vorgabesignal an das Bremskraftverstärkersteuergerät 30 des elektromechanischen Bremskraftverstärkers 12 auszugeben.

Das Bremskraftverstärkersteuergerät 30 ist zum Zusammenwirken mit dem Hydrauliksteuergerät 28 ausgebildet. Das Bremskraftverstärkersteuergerät 30 weist eine zweite Ansteuerelektronik 30a auf, mittels welcher mindestens ein Steuersignal 32 an den Motor 26 des elektromechanischen Bremskraftverstärkers ausgebbar ist. Die zweite Ansteuerelektronik 30a ist zumindest in einem Normalmodus derart ausgelegt, dass die zweite Ansteuerelektronik 30a das Steuersignal 32 unter Berücksichtigung des von dem Hydrauliksteuergerät 28 ausgegebenen Vorgabesignals an den Motor 26 des elektromechanischen Bremskraftverstärkers 12 ausgibt. Der mittels des Steuersignals 32 angesteuerte (elektrische) Motor führt in diesem Fall zumindest eine Motoristgröße aus, welche der zumindest einen (durch das Hydrauliksteuergerät 28) festgelegten Motorsollgröße entspricht. Der Motor 26 des elektromechanischen Bremskraftverstärkers 12 ist deshalb (über das Bremskraftverstärkersteuergerät 30) durch die erste Ansteuerelektronik 28 des Hydrauliksteuergeräts 28 so ansteuerbar, dass die Betriebsweise/Funktionsweise des Motors 26 mittels der ersten Ansteuerelektronik 28 vorgebbar ist. Die Steuerung/Regelung der mittels des Motors 26 ausgeführten Bremskraftverstärkung ist somit mittels des Hydrauliksteuergeräts 28 (vorzugsweise zusätzlich zu den "klassischen" ABS-Funktionen, ESP-Funktionen und/oder Verblendfunktionen) ausführbar.

Demgegenüber führt die zweite Ansteuerelektronik 30a des Bremskraftverstärkersteuergeräts 30 zumindest in ihrem Normalmodus nur eine der ersten Ansteuerelektronik 28a untergeordnete Ansteuerung/Regelung des Motors 26 des elektromechanischen Bremskraftverstärkers 12 aus. Die der ersten Ansteuerelektronik 28a untergeordnete Ansteuerung/Regelung des Motors 26 kann z.B. eine Feineinstellung/Feinregulierung, Kontrolle und/oder Korrektur des Motorstroms, der Motorspannung, des Motormoments, der Drehzahl und/oder des Drehwinkels des Motors 26 umfassen/sein.

Die vorteilhafte Ausbildung der Steuergeräte 28 und 30 schafft ein Master-Slave-Konzept, wobei das Hydrauliksteuergerät 28 das Master-Steuergerät und das Bremskraftverstärkersteuergerät 30 das Slave-Steuergerät ist. Zur Realisierung des vorteilhaften Master-Slave-Konzepts zwischen den Steuergeräten 28 und 30 ist die erste Ansteuerelektronik 28a des Hydrauliksteuergeräts 28 lediglich mit einer zur Steuerung/Regelung der mittels des elektromechanischen Bremskraftverstärkers 12 auszuführenden Bremskraftverstärkung notwendigen Funktionssoftware auszustatten. (Möglich ist jedoch auch eine andere Hierarchie der Steuergeräte 28 und 30, bei welcher beide Steuergeräte 28 und 30 als Slave-Steuergeräte an ein anderes Master-Steuergerät (z.B. ein ECU) angeschlossen sind.)

Mittels des vorteilhaften Master-Slave-Konzepts kann die Funktionsweise der beiden Steuergeräte 28 und 30 hinsichtlich ihres gemeinsamen Zusammenwirkens optimiert werden: Insbesondere kann die Funktionsweise des (elektrischen) Motors 26 des elektromechanischen Bremskraftverstärkers 12 automatisch an den aktuellen Betrieb des mindestens einen Ventils und/oder des mindestens einen Pumpenmotors 14 des Hydraulikaggragats 10/des Bremssystems so angepasst werden, dass der mindestens eine Pumpenmotor 14 nicht gegen den Motor 26 des elektromechanischen Bremskraftverstärkers 12 fördert. Auch ist auf diese Weise eine Ansteuerung des Motors 26 des elektromechanischen Bremskraftverstärkers 12 zum Ausführen eines (hochdynamischen) Bremsdruckaufbaus in den Radbremszylindern 16 während eines Schließens mindestens eines an den Radbremszylindern 16 angebundenen Ventils/Einlassventils (aufgrund eines plötzlichen Absenkens eines Fahrbahnreibwerts) verhinderbar. Stattdessen ist der von dem Hydrauliksteuergerät 28 (mit-)angesteuerte Motor 26 des elektromechanischen Bremskraftverstärkers 12 so einsetzbar, dass seine Funktionsweise an alle möglicherweise von dem Hydrauliksteuergerät 28 angesteuerte Vorgänge angepasst ist. Speziell ist die Funktionsweise des Motors 26 des elektromechanischen Bremskraftverstärkers 12 auch an eine (mittels des mindestens einen Ventils und/oder des mindestens einen Pumpenmotors 14 ausgeführte) Volumenverblendung (zur Anpassung der in den Radbremszylindern 16 vorliegenden Bremsdrücke an ein zeitlich variierendes Generator-Bremsmoment zum rekuperativen Bremsen des Fahrzeugs) anpassbar.

Mittels des vorteilhaften Master-Slave-Konzepts ist deshalb auch ein schonender Betrieb des Motors 26 des elektromechanischen Bremskraftverstärkers 12 möglich. Außerdem schafft die vorteilhafte Anpassung der Funktionsweise des Motors 26 des elektromechanischen Bremskraftverstärkers 12 an die von dem Hydrauliksteuergerät 28 angesteuerten Vorgänge ein angenehmes Bremsbetätigungsgefühl (Pedalgefühl) für den das Bremsbetätigungselement 24 betätigenden Fahrer. Speziell ist eine Anpassung des Bremsbetätigungsgefühls (Pedalgefühls) an aktuell ausgeführte Verblendvorgänge, Längsdynamikregelungsvorgänge und/oder Querdynamikregelungsvorgänge bereits durch die erste Ansteuerelektronik 28a des Hydrauliksteuergeräts 28 möglich.

Dabei ist eine Aufteilung der Funktionen der beiden Steuergeräte 28 und 30 realisiert, welche kein Erarbeiten von neuen Kommunikationskonzepten während des Betriebs der beiden Steuergeräte 28 und 30 erfordert. Durch die klare Trennung der Funktionen der Steuergeräte 28 und 30 muss der elektromechanische Bremskraftverstärker 12 nicht appliziert werden. Somit kann das Bremskraftverstärkersteuergerät 30 einfacher ausgeführt werden, ohne dass dazu Funktionseinbußen des elektromechanischen Bremskraftverstärkers 12 in Kauf zu nehmen sind. Die Herstellungskosten des Bremskraftverstärkersteuergeräts 30 sind deshalb reduzierbar bei Beibehaltung des Bremskomforts für den Fahrer.

Ergänzend kann eine Steuerung/Regelung der Ventile durch die erste Ansteuerelektronik 28a des Hydrauliksteuergeräts 28 auf die Steuerung/Regelung des Motors 26 des elektromechanischen Bremskraftverstärkers 12 abgestimmt werden. Die Einlassventile können z.B. im ABS-Fall nicht sofort vollständig geschlossen werden, um extreme Druckspitzen aufgrund einer Rotorträgheit des sich drehenden Motors 26 des elektromechanischen Bremskraftverstärkers 12 abzumildern. Dies gewährleistet einen verbesserten Bauteilschutz und eine höhere Energieeffizienz.

Um einen geringen Bauraumbedarf des mit den Steuergeräten 28 und 30 ausgestatteten Bremssystems sicherzustellen, kann das Hydrauliksteuergerät 28 in das Hydraulikaggregat 10 integriert sein. Als Alternative oder als Ergänzung dazu kann das Bremskraftverstärkersteuergerät 30 an/in dem Motor 26 des elektromechanischen Bremskraftverstärkers 12, bzw. an und/oder in dem elektromechanischen Bremskraftverstärker 12, integriert sein. Beispielsweise kann das Bremskraftverstärkersteuergerät 30 in einem Deckel des Motors 26 des elektromechanischen Bremskraftverstärkers 12 verbaut sein.

Es wird darauf hingewiesen, dass eine Ausbildung der beiden Steuergeräte 28 und 30 bevorzugt wird, bei welcher die beiden Steuergeräte 28 und 30 zwar relativ nahe aneinander, aber dennoch als jeweils eigene Bauteile, bzw. als Untereinheiten jeweils eigener Bauteile, vorliegen. Das Hydrauliksteuergerät 28 oder das damit ausgestattete Hydraulikaggregat 10 können zumindest ein erstes Gehäuse 28b aufweisen. Die erste Ansteuerelektronik 28a des Hydrauliksteuergeräts 28 ist vorzugsweise in und/oder an dem ersten Gehäuse 28b integriert, während das Bremskraftverstärkersteuergerät 30 oder der damit ausgestattete elektromechanische Bremskraftverstärker 12 zumindest ein (anderes) zweites Gehäuse 12a haben. (Die zweite Ansteuerelektronik 30a ist somit in und/oder an dem zweiten Gehäuse 12a integriert.) Das erste Gehäuse 28b kann z.B. ein Gehäuse 28b des Hydrauliksteuergeräts 28 oder des Hydraulikaggregats 10 sein. Bei dem Bremssystem der Fig. 1 ist das Bremskraftverstärkersteuergerät 30 (zusammen mit der zweiten Ansteuerelektronik 30a) in das Gehäuse 12a des elektromechanischen Bremskraftverstärkers 12 (als das zweite Gehäuse 12a) integriert. Als Alternative dazu kann das Bremskraftverstärkersteuergerät 30 jedoch auch ein eigenes Gehäuse (als das zweite Gehäuse 12a) haben.

Bevorzugter Weise weist das Hydrauliksteuergerät 28 (bzw. das erste Gehäuse 28b) mindestens einen ersten Datenleitungsanschluss 34a und 34b, an welchem mindestens eine Datenleitung 36a und 36b anbindbar oder angebunden ist, auf. Gegebenenfalls kann auch das Bremskraftverstärkersteuergerät 30 (bzw. das zweite Gehäuse 12a) mindestens einen zweiten Datenleitungsanschluss 38a und 38b haben, an welchem die mindestens eine Datenleitung 36a und 36b anbindbar oder angebunden ist. Das Hydrauliksteuergerät 28 ist somit über die mindestens eine Datenleitung 36a und 36b mit dem Bremskraftverstärkergerät 30 verbindbar/verbunden. Vorzugsweise ist unter der mindestens einen Datenleitung 36a und 36b mindestens eine ausschließlich die beiden Steuergeräte 28 und 30 miteinander verbindende Leitung zu verstehen. Anstelle einer herkömmlichen Anbindung der beiden Steuergeräte 28 und 30 an einen CAN-, einen I²C- oder einen Flexray-Datenbus weisen in der Ausführungsform der Fig. 1 das Hydrauliksteuergerät 28 und das Bremskraftverstärkersteuergerät 30 eine durch die mindestens eine Datenleitung 36a und 36b realisierte "private" Verbindung auf. Nach außen erscheint ein aus den beiden Steuergeräten 28 und 30 gebildete System somit wie ein integriertes System.

Die mindestens eine Datenleitung 36a und 36b kann insbesondere eine SPI-Leitung 36a und 36b (Serial Peripheral Interface) sein. Damit ist eine "private" SPI-Verbindung/SPI-Schnittstelle zwischen den beiden Steuergeräten 28 und 30 ausbildbar. Eine Übertragungsgeschwindigkeit einer mittels der mindestens einen SPI-Leitung 36a und 36b geschaffenen SPI-Verbindung/SPI-Schnittstelle ist signifikant höher als eine entsprechende Übertragungsgeschwindigkeit eines CAN-, eines I²C- oder eines Flexray-Datenbusses. Als Alternative zu einer mittels der mindestens einen SPI-Leitung 36a und 36b realisierten SPI-Verbindung/SPI-Schnittstelle ist auch eine USB-Verbindung/USB-Schnittstelle zwischen den beiden Steuergeräten 28 und 30 über mindestens eine USB-Leitung/ein USB-Kabel möglich. In beiden Fällen ist eine viel schnellere Kommunikation zwischen den Steuergeräten 28 und 30 als bei einer herkömmlichen Datenbus-Verbindung gewährleistet.

Vorzugsweise sind die beiden Steuergeräte 28 und 30 über eine erste Datenleitung 36a und über eine zweite Datenleitung 36b miteinander verbindbar/verbunden. Somit ist ein schneller bidirektionaler Datenaustausch zwischen den beiden Steuergeräten 28 und 30 verlässlich realisierbar. Beispielsweise kann die zumindest eine von der ersten Ansteuerelektronik 28a festgelegte Motorsollgröße über die erste Datenleitung 36a an die zweite Ansteuerelektronik 30a ausgegeben werden. Auch weitere Daten können über die erste Datenleitung 36a von der ersten Ansteuerelektronik 28a an die zweite Ansteuerelektronik 30a weitergeleitet werden.

Außerdem wird eine Ausbildung des Bremskraftverstärkersteuergeräts 30 bevorzugt, bei welcher das Bremskraftverstärkersteuergerät 30 dazu ausgelegt ist, unter Berücksichtigung mindestens eines Sensorsignals 40 mindestens eines Bremsbetätigungssensors 42 die zumindest eine Bremsbetätigungsstärke-Größe über die mindestens eine Datenleitung 36a und 36b, insbesondere über die zweite Datenleitung 36b, an das Hydrauliksteuergerät 28 bereitzustellen. Über die zweite Datenleitung 36b können auch Messdaten, wie beispielsweise Motormessdaten des Motors 26 des elektromechanischen Bremskraftverstärkers 12, und Botschaften der zweiten Ansteuerelektronik 30a an das Hydrauliksteuergerät 28 ausgegeben werden.

Der mindestens eine Bremsbetätigungssensor 42 kann beispielsweise ein Bremswegsensor (Pedalwegsensor, Stangenwegsensor), ein Differenzwegsensor, ein Fahrerbremskraftsensor und/oder ein Fahrerbremsdrucksensor sein. Der mindestens eine Bremsbetätigungssensor 42 ist problemlos in den elektromechanischen Bremskraftverstärker 12 integrierbar, wobei gleichzeitig die Bereitstellung der zumindest einen Bremsbetätigungsstärke-Größe an das Hydrauliksteuergerät 28 gewährleistet bleibt.

In einer weiteren vorteilhaften Ausführungsform weist das Hydrauliksteuergerät 28 (bzw. das erste Gehäuse 28b) einen ersten Taktsynchronisationsleitungsanschluss 44, an welchem eine Taktsynchronisationsleitung 46 anbindbar oder angebunden ist, auf. Entsprechend kann auch das Bremskraftverstärkersteuergerät 30 (bzw. das zweite Gehäuse 12a) einen zweiten Taktsynchronisationsleitungsanschluss 48 haben, an welchem die Taktsynchronisationsleitung 46 anbindbar oder angebunden ist. Das Hydrauliksteuergerät 28 ist in diesem Fall über die Taktsynchronisationsleitung 46 mit dem Bremskraftverstärkersteuergerät 30 verbindbar/verbunden. Speziell kann das Bremskraftverstärkersteuergerät 30 auf das Hydrauliksteuergerät 28 synchronisierbar/synchronisiert sein. Vor Allem kann über die Taktsynchronisationsleitung 46 eine Zeitsynchronisation (GTM, Generic Timer Model) der beiden Steuergeräte 28 und 30 ausgebildet sein.

Außerdem kann an dem Hydrauliksteuergerät 28 (bzw. dem ersten Gehäuse 28b) ein Fahrzeugbusanschluss 50 ausgebildet sein, so dass ein Datenaustausch zwischen einem an dem Fahrzeugbusanschluss 50 angeschlossenen (nicht skizzierten) Fahrzeug-Datenbus und dem Hydrauliksteuergerät 28 ausführbar ist. Demgegenüber wird eine Fahrzeugbusanschluss-freie Ausbildung des Bremskraftverstärkersteuergeräts 30 (bzw. des zweiten Gehäuses 12a des Bremskraftverstärkersteuergeräts 30/des elektromechanischen Bremskraftverstärkers 12) bevorzugt. Von den beiden Steuergeräten28 und 30 ist in diesem Fall nur das Hydrauliksteuergerät 28 zum Senden und Empfangen von Daten über den Fahrzeug-Datenbus ausgelegt. Jeder (bidirektionale) Datenaustausch zwischen den beiden Steuergeräten 28 und 30 und weiteren Fahrzeugkomponenten erfolgt somit über das Hydrauliksteuergerät 28. Das aus den beiden Steuergeräten 28 und 30 gebildete System kommuniziert somit mit den weiteren Fahrzeugkomponenten wie ein integriertes System.

Sofern die beiden Steuergeräte 28 und 30 funktionsfähig vorliegen, bewirkt eine Betätigung des Bremsbetätigungselements 24 durch den Fahrer, dass die zumindest eine Bremsbetätigungsstärke-Größe von dem Bremskraftverstärkersteuergerät 30 über die mindestens eine Datenleitung 36a und 36b (vorzugsweise per SPI/per USB) an die erste Ansteuerelektronik 28a des Hydrauliksteuergeräts 28 ausgegeben wird. In dem Hydrauliksteuergerät 28 erfolgt durch die erste Ansteuerelektronik 28a die eigentliche Interpretation des Fahrerbremswunsches und die Ermittlung der zumindest einen Motorsollgröße des Motors 26 des elektromechanischen Bremskraftverstärkers 12, welche eine verlässliche Einhaltung des Fahrerbremswunsches gewährleistet. Beispielsweise kann eine standardgemäße Differenzwegregelung (nach dem bekannten Regelprinzip des elektromechanischen Bremskraftverstärkers 12) mittels der ersten Ansteuerelektronik 28a ausführbar sein.

Das der zumindest einen festgelegten Motorsollgröße entsprechende Vorgabesignal kann anschließend über die mindestens eine Datenleitung 36a und 36b (vorzugsweise per SPI/per USB) von dem Hydrauliksteuergerät 28 an die zweite Ansteuerelektronik 30a des Bremskraftverstärkersteuergeräts 30 ausgegeben werden. In dem Bremskraftverstärkersteuergerät 30 wird deshalb durch die zweite Ansteuerelektronik 30a nur noch eine an die zumindest eine festgelegte Motorsollgröße angepasste Motorregelung/Motorkommutierung ausgeführt/gerechnet. Dies kann z.B. nach einem "klassischen" mehrschleifigen Regleraufbau durch Stromregler, Drehzahlregler und/oder Drehwinkelregler erfolgen. Währenddessen an dem Motor 26 des elektromechanischen Bremskraftverstärkers 12 erfasste Motormesswerte können über die mindestens eine Datenleitung 36a und 36b (vorzugsweise per SPI/per USB) von dem Bremskraftverstärkersteuergerät 30 an das Hydrauliksteuergerät 28 ausgegeben werden. Die erste Ansteuerelektronik 28a des Hydrauliksteuergeräts 28 kann dazu ausgelegt sein, die ausgegebenen Motormesswerte bei einer Neufestlegung der zumindest einen Motorsollgröße zu berücksichtigen.

In einer vorteilhaften Weiterbildung weist das Hydrauliksteuergerät 28 eine erste Ansteuerelektronik 28a auf, welche zusätzlich dazu ausgelegt ist, bei einer Funktionsbeeinträchtigung und/oder einem Funktionsausfall des Bremskraftverstärkersteuergeräts 30 und/oder des elektromechanischen Bremskraftverstärkers 12 das mindestens eine Ventil und/oder den mindestens einen Pumpenmotor 14 des Hydraulikaggregats 10 und/oder des Bremssystems zum Ausführen einer Bremskraftverstärkung anzusteuern. Das mindestens eine Ventil und/oder der mindestens eine Pumpenmotor 14 können damit die Bremskraftverstärkung so übernehmen, dass der Fahrer trotz der Funktionsbeeinträchtigung/des Funktionsausfalls des Bremskraftverstärkersteuergeräts 30/des elektromechanischen Bremskraftverstärkers 12 noch mit einer vergleichsweise geringen Fahrerbremskraft einen ausreichenden Bremsdruck in dem mindestens einen Radbremszylinder 16 bewirken kann. Speziell kann zur Unterstützung des Druckaufbaus in dem mindestens einen Radbremszylinder 16 ein Pumpenanlauf des mindestens einen Pumpenmotors 16 genutzt werden. Die mittels des Hydrauliksteuergeräts 28 angesteuerte Bremskraftverstärkung kann mindestens einen Wert mindestens eines Drucksensors des Hydraulikaggregats 10/des Bremssystems berücksichtigen.

In einer alternativen oder ergänzenden Weiterbildung kann die zweite Ansteuerelektronik 30a des Bremskraftverstärkersteuergeräts 30 bei einer Funktionsbeeinträchtigung und/oder einem Funktionsausfall des Hydrauliksteuergeräts 28 aus dem oben beschriebenen Normalmodus in einen Überbrückungsmodus überführbar sein. Bevorzugter Weise ist die zweite Ansteuerelektronik 30a in dem Überbrückungsmodus dazu ausgelegt, unter Berücksichtigung zumindest der Bremsbetätigungsstärke-Größe und/oder des mindestens einen Sensorsignals 40 des mindestens einen Bremsbetätigungssensors 42 die zumindest eine Motorsollgröße selbst festzulegen. Während bei einem Vorliegen der zweiten Ansteuerelektronik 30a in ihrem Normalmodus (bei einer vollen Funktionsfähigkeit des Hydrauliksteuergeräts 28) die Funktionssoftware für die Bremskraftverstärkung nur von der ersten Ansteuerelektronik 28a gerechnet wird, kann die in den Überbrückungsmodus überführte zweite Ansteuerelektronik 30a in diesem Fall die Funktionssoftware für die Bremskraftverstärkung selbst rechnen. Die in den Überbrückungsmodus überführte zweite Ansteuerelektronik 30a kann deshalb mittels der durch sie ausführbaren Backup-Funktion die Funktionsbeeinträchtigung/den Funktionsausfall des Hydrauliksteuergeräts 28 überbrücken. Die Bremskraftverstärkung kann damit (zumindest übergangsweise) auch mit dem Bremskraftverstärkersteuergerät 30 allein aufrechterhalten werden.

Die in dem vorausgehenden Absatz beschriebene vorteilhafte Ausbildung der zweiten Ansteuerelektronik 30a erfordert lediglich eine Integration der zur Festlegung der zumindest einen Motorsollgröße erforderlichen Software in die zweite Ansteuerelektronik 30a. Der erforderliche Software-Stand ist ein Basisstand mit der Funktion der Bremskraftverstärkung, welcher keine fahrzeugspezifische Anpassung erfordert. Somit ist die erforderliche Software auch ohne eine Steigerung eines Bauraumbedarfs der zweiten Ansteuerelektronik 30 in dieser leicht hinterlegbar. Nach einem Funktionsausfall des Hydrauliksteuergeräts 28 kann eine Kommunikation der beiden Steuergeräte 28a und 30 mit den weiteren Fahrzeugkomponenten auf ein Lesen und ein Versenden von Statusinformationen beschränkt sein.

Außerdem kann der System-ASIC im Bremskraftverstärkersteuergerät 30 durch ein ABS ersetzt werden. In diesem Fall können die Ein- und Auslassventile im ESP derart angesteuert werden, dass auch ein pumpenloses ABS möglich ist.

## Patentansprüche

1. Hydrauliksteuergerät (28) für zumindest ein Hydraulikaggregat (10) eines Bremssystems mit:
einer ersten Ansteuerelektronik (28a), mittels welcher mindestens ein Ventilsteuersignal an mindestens ein Ventil des Hydraulikaggregats (10) und/oder des Bremssystems und/oder mindestens ein Pumpenmotorsteuersignal an mindestens einen Pumpenmotor (14) mindestens einer Pumpe des Hydraulikaggregats (10) und/oder des Bremssystems ausgebbar sind;
**dadurch gekennzeichnet, dass**
die erste Ansteuerelektronik (28a) zusätzlich dazu ausgelegt ist, unter Berücksichtigung zumindest einer bereitgestellten Bremsbetätigungsstärke-Größe bezüglich einer Bremsbetätigungsstärke einer aktuellen Betätigung eines an dem Bremssystem angebundenen Bremsbetätigungselements (24) zumindest eine von einem Motor (26) eines elektromechanischen Bremskraftverstärkers (12) des Bremssystems auszuführende Motorsollgröße festzulegen und ein der zumindest einen festgelegten Motorsollgröße entsprechendes Vorgabesignal an ein Bremskraftverstärkersteuergerät (30) des elektromechanischen Bremskraftverstärkers (12) auszugeben.

2. Hydrauliksteuergerät (28) nach Anspruch 1, wobei das Hydrauliksteuergerät (28) mindestens einen ersten Datenleitungsanschluss (34a, 34b) aufweist, an welchem mindestens eine Datenleitung (36a, 36b) derart anbindbar oder angebunden ist, dass das Hydrauliksteuergerät (28) über die mindestens eine Datenleitung (36a, 36b) mit dem Bremskraftverstärkersteuergerät (30) verbindbar oder verbunden ist.

3. Hydrauliksteuergerät (28) nach Anspruch 1 oder 2, wobei das Hydrauliksteuergerät (28) einen ersten Taktsynchronisationsleitungsanschluss (44) aufweist, an welchem eine Taktsynchronisationsleitung (46) derart anbindbar oder angebunden ist, dass das Hydrauliksteuergerät (28) über die Taktsynchronisationsleitung (46) mit dem Bremskraftverstärkersteuergerät (30) verbindbar oder verbunden ist.

4. Hydrauliksteuergerät (28) nach einem der vorhergehenden Ansprüche, wobei die erste Ansteuerelektronik (28a) zusätzlich dazu ausgelegt ist, bei einer Funktionsbeeinträchtigung und/oder einem Funktionsausfall des Bremskraftverstärkersteuergeräts (30) und/oder des elektromechanischen Bremskraftverstärkers (12) das mindestens eine Ventil und/oder den mindestens einen Pumpenmotor (14) zum Ausführen einer Bremskraftverstärkung anzusteuern.

5. Hydraulikaggregat (10) für ein Bremssystem mit einem Hydrauliksteuergerät (28) nach einem der vorhergehenden Ansprüche.

6. Bremskraftverstärkersteuergerät (30) für einen elektromechanischen Bremskraftverstärker (12) eines Bremssystems zum Zusammenwirken mit einem Hydrauliksteuergerät (18) nach einem der Ansprüche 1 bis 4 mit:
einer zweiten Ansteuerelektronik (30a), mittels welcher mindestens ein Steuersignal (32) an den Motor (26) des elektromechanischen Bremskraftverstärkers (12) ausgebbar ist;
**dadurch gekennzeichnet, dass**
die zweite Ansteuerelektronik (30a) zumindest in einem Normalmodus derart ausgelegt ist, dass die zweite Ansteuerelektronik (30) das Steuersignal (32) unter Berücksichtigung des von dem Hydrauliksteuergerät (28) ausgegebenen Vorgabesignals an den Motor (26) des elektromechanischen Bremskraftverstärkers (12) ausgibt, so dass der mittels des Steuersignals (32) angesteuerte Motor (26) zumindest eine Motoristgröße ausführt, welche der zumindest einen festgelegten Motorsollgröße entspricht.

7. Bremskraftverstärkersteuergerät (30) nach Anspruch 6, wobei das Bremskraftverstärkersteuergerät (30) mindestens einen zweiten Datenleitungsanschluss (38a, 38b) aufweist, an welchem die mindestens eine Datenleitung (36a, 36b) derart anbindbar oder angebunden ist, dass das Bremskraftverstärkersteuergerät (30) über die mindestens eine Datenleitung (36a, 36b) mit dem Hydrauliksteuergerät (28) verbindbar oder verbunden ist.

8. Bremskraftverstärkersteuergerät (30) nach Anspruch 7, wobei das Bremskraftverstärkersteuergerät (30) dazu ausgelegt ist, unter Berücksichtigung mindestens eines Sensorsignals (40) mindestens eines Bremsbetätigungssensors (42) die zumindest eine Bremsbetätigungsstärke-Größe über die mindestens eine Datenleitung (36a, 36b) an das Hydrauliksteuergerät (28) bereitzustellen.

9. Bremskraftverstärkersteuergerät (30) nach einem der Ansprüche 6 bis 8, wobei das Bremskraftverstärkersteuergerät (30) einen zweiten Taktsynchronisationsleitungsanschluss (48) aufweist, an welchem die Taktsynchronisationsleitung (46) derart anbindbar oder angebunden ist, dass das Bremskraftverstärkersteuergerät (30) über die Taktsynchronisationsleitung (46) mit dem Hydrauliksteuergerät (28) verbindbar oder verbunden ist.

10. Bremskraftverstärkersteuergerät (30) nach Anspruch 9, wobei das Bremskraftverstärkersteuergerät (30) auf das Hydrauliksteuergerät (28) synchronisierbar ist.

11. Bremskraftverstärkersteuergerät (30) nach einem der Ansprüche 6 bis 10, wobei die zweite Ansteuerelektronik (30a) bei einer Funktionsbeeinträchtigung und/oder einem Funktionsausfall des Hydrauliksteuergeräts (28) aus dem Normalmodus in einen Überbrückungsmodus überführbar ist, und wobei die zweite Ansteuerelektronik (30a) in dem Überbrückungsmodus dazu ausgelegt ist, unter Berücksichtigung zumindest der zumindest einen Bremsbetätigungsstärke-Größe und/oder des mindestens einen Sensorsignals (40) die zumindest eine Motorsollgröße selbst festzulegen.

12. Elektromechanischer Bremskraftverstärker (12) für ein Bremssystem mit einem Bremskraftverstärkersteuergerät (30) nach einem der Ansprüche 6 bis 11.

13. Elektromechanischer Bremskraftverstärker (12) nach Anspruch 12, wobei das Bremskraftverstärkersteuergerät (30) in einem Deckel des Motors (26) des elektromechanischen Bremskraftverstärkers (12) verbaut ist.

14. Bremssystem für ein Fahrzeug mit zumindest einem Hydrauliksteuergerät (28) nach einem der Ansprüche 1 bis 4 und einem Bremskraftverstärkersteuergerät (30) nach einem der Ansprüche 6 bis 11.

15. Bremssystem nach Anspruch 14, wobei das Hydrauliksteuergerät (28) oder das damit ausgestattete Hydraulikaggregat (10) zumindest ein erstes Gehäuse (28b) aufweisen, in und/oder an welchem zumindest die erste Ansteuerelektronik (28a) integriert ist, und wobei das Bremskraftverstärkersteuergerät (30) oder der damit ausgestattete elektromechanische Bremskraftverstärker (12) zumindest ein zweites Gehäuse (12a) aufweisen, in und/oder an welchem zumindest die zweite Ansteuerelektronik (30a) integriert ist.

## Claims

1. Hydraulic controller (28) for at least one hydraulic unit (10) of a brake system, having:
first actuating electronics (28a) by means of which at least one valve control signal is outputtable to at least one valve of the hydraulic unit (10) and/or of the brake system and/or at least one pump motor control signal is outputtable to at least one pump motor (14) of at least one pump of the hydraulic unit (10) and/or of the brake system;
**characterized in that**
the first actuating electronics (28a) are additionally designed to take into consideration at least one provided brake operating power variable for a brake operating power of a current instance of operation of a brake operating element (24) linked to the brake system in order to stipulate at least one motor setpoint variable to be implemented by a motor (26) of an electromechanical brake force booster (12) of the brake system and to output a preset signal consistent with the at least one stipulated motor setpoint variable to a brake force booster controller (30) of the electromechanical brake force booster (12).

2. Hydraulic controller (28) according to Claim 1, wherein the hydraulic controller (28) has at least one first data line port (34a, 34b) to which at least one data line (36a, 36b) is linkable or linked such that the hydraulic controller (28) is connectable or connected to the brake force booster controller (30) via the at least one data line (36a, 36b) .

3. Hydraulic controller (28) according to Claim 1 or 2, wherein the hydraulic controller (28) has a first clock synchronization line port (44) to which a clock synchronization line (46) is linkable or linked such that the hydraulic controller (28) is connectable or connected to the brake force booster controller (30) via the clock synchronization line (46) .

4. Hydraulic controller (28) according to one of the preceding claims, wherein the first actuating electronics (28a) are additionally designed to actuate the at least one valve and/or the at least one pump motor (14) to carry out a brake force boost in the event of functional impairment and/or functional failure of the brake force booster controller (30) and/or the electromechanical brake force booster (12).

5. Hydraulic unit (10) for a brake system having a hydraulic controller (28) according to one of the preceding claims.

6. Brake force booster controller (30) for an electromechanical brake force booster (12) of a brake system for interacting with a hydraulic controller (18) according to one of Claims 1 to 4, having:
second actuating electronics (30a) by means of which at least one control signal (32) is outputtable to the motor (26) of the electromechanical brake force booster (12);
**characterized in that**
the second actuating electronics (30a) are designed, at least in a normal mode, such that the second actuating electronics (30) output the control signal (32) to the motor (26) of the electromechanical brake force booster (12) taking into consideration the preset signal output by the hydraulic controller (28), so that the motor (26) actuated by means of the control signal (32) implements at least one motor actual variable consistent with the at least one stipulated motor setpoint variable.

7. Brake force booster controller (30) according to Claim 6, wherein the brake force booster controller (30) has at least one second data line port (38a, 38b) to which the at least one data line (36a, 36b) is linkable or linked such that the brake force booster controller (30) is connectable or connected to the hydraulic controller (28) via the at least one data line (36a, 36b).

8. Brake force booster controller (30) according to Claim 7, wherein the brake force booster controller (30) is designed to take into consideration at least one sensor signal (40) of at least one brake operating sensor (42) in order to provide the at least one brake operating power variable to the hydraulic controller (28) via the at least one data line (36a, 36b) .

9. Brake force booster controller (30) according to one of Claims 6 to 8, wherein the brake force booster controller (30) has a second clock synchronization line port (48) to which the clock synchronization line (46) is linkable or linked such that the brake force booster controller (30) is connectable or connected to the hydraulic controller (28) via the clock synchronization line (46).

10. Brake force booster controller (30) according to Claim 9, wherein the brake force booster controller (30) is synchronizable to the hydraulic controller (28) .

11. Brake force booster controller (30) according to one of Claims 6 to 10, wherein the second actuating electronics (30a) are transferable from the normal mode to a bypass mode in the event of functional impairment and/or functional failure of the hydraulic controller (28), and wherein the second actuating electronics (30a) are designed, in the bypass mode, to take into consideration at least the at least one brake operating power variable and/or the at least one sensor signal (40) in order to stipulate the at least one motor setpoint variable themselves.

12. Electromechanical brake force booster (12) for a brake system having a brake force booster controller (30) according to one of Claims 6 to 11.

13. Electromechanical brake force booster (12) according to Claim 12, wherein the brake force booster controller (30) is installed in a cover of the motor (26) of the electromechanical brake force booster (12) .

14. Brake system for a vehicle having at least one hydraulic controller (28) according to one of Claims 1 to 4 and a brake force booster controller (30) according to one of Claims 6 to 11.

15. Brake system according to Claim 14, wherein the hydraulic controller (28) or the hydraulic unit (10) equipped therewith have at least one first housing (28b) in and/or on which at least the first actuating electronics (28a) are integrated, and wherein the brake force booster controller (30) or the electromechanical brake force booster (12) equipped therewith have at least one second housing (12a) in and/or on which at least the second actuating electronics (30a) are integrated.

## Revendications

1. Appareil de commande hydraulique (28) pour au moins un groupe hydraulique (10) d'un système de freinage, doté :
- d'une première électronique de commande (28a), au moyen de laquelle au moins un signal de commande de vanne peut être émis vers au moins une vanne du groupe hydraulique (10) et/ou du système de freinage et/ou au moins un signal de commande de moteur de pompe peut être émis vers au moins un moteur de pompe (14) d'au moins une pompe du groupe hydraulique (10) et/ou du système de freinage ;
**caractérisé en ce que**
- la première électronique de commande (28a) est en outre conçue pour établir au moins une grandeur de consigne du moteur à atteindre par un moteur (26) d'un servofrein électromécanique (12) du système de freinage et émettre un signal de consigne correspondant à l'au moins une grandeur de consigne du moteur vers un appareil de commande (30) du servofrein électromécanique (12), en tenant compte d'une grandeur de force d'actionnement du frein en relation avec une force d'un actionnement actuel d'un élément d'actionnement du frein (24) connecté au système de freinage.

2. Appareil de commande hydraulique (28) selon la revendication 1, dans lequel l'appareil de commande hydraulique (28) comporte au moins un premier raccordement de câble de données (34a, 34b), auquel au moins un câble de données (36a, 36b) est raccordé ou raccordable de sorte que l'appareil de commande hydraulique (28) est connecté ou connectable avec l'appareil de commande de servofrein (30) par le biais de l'au moins un câble de données (36a, 36b).

3. Appareil de commande hydraulique (28) selon la revendication 1 ou 2, dans lequel l'appareil de commande hydraulique (28) comporte un raccordement de câble de synchronisation de cadence (44), auquel au moins un câble de synchronisation de cadence (46) est raccordé ou raccordable de sorte que l'appareil de commande hydraulique (28) est connecté ou connectable avec l'appareil de commande de servofrein (30) par le biais du câble de synchronisation de cadence (46).

4. Appareil de commande hydraulique (28) selon l'une des revendications précédentes, dans lequel la première électronique de commande (28a) est en outre conçue pour commander l'au moins une vanne et/ou l'au moins un moteur de pompe (14) afin d'exécuter un processus d'amplification du freinage lors d'une dégradation de fonction et/ou d'un dysfonctionnement de l'appareil de commande de servofrein (30) et/ou du servofrein électromécanique (12).

5. Groupe hydraulique (10) pour un système de freinage doté d'un appareil de commande hydraulique (28) selon l'une des revendications précédentes.

6. Appareil de commande de servofrein (30) pour un servofrein électromécanique (12) d'un système de freinage destiné à opérer en coopération avec un appareil de commande hydraulique (18) selon l'une des revendications 1 à 4 doté :
- d'une deuxième électronique de commande (30a), au moyen de laquelle au moins un signal de commande (32) peut être émis vers le moteur (26) du servofrein électromécanique (12) ;
**caractérisé en ce que**
- la deuxième électronique de commande (30a) est conçue de sorte qu'au moins dans un mode normal la deuxième électronique de commande (30) émet le signal de commande (32) vers le moteur (26) du servofrein électromécanique (12) en tenant compte du signal de consigne émis par l'appareil de commande hydraulique (28), de sorte que le moteur (26) commandé au moyen du signal de commande (32) exécute au moins une grandeur réelle de moteur, laquelle correspond à l'au moins une valeur de consigne de moteur établie.

7. Appareil de commande de servofrein (30) selon la revendication 6, dans lequel l'appareil de commande de servofrein (30) comporte au moins un deuxième raccordement de câble de données (38a, 38b), auquel au moins un câble de données (36a, 36b) est raccordé ou raccordable de sorte que l'appareil de commande de servofrein (30) est connecté ou connectable avec l'appareil de commande hydraulique (28) par le biais de l'au moins un câble de données (36a, 36b).

8. Appareil de commande de servofrein (30) selon la revendication 7, dans lequel l'appareil de commande de servofrein (30) est conçu de façon à fournir l'au moins une grandeur de force d'actionnement de frein à l'appareil de commande hydraulique (28) par le biais de l'au moins un câble de données (36a, 36b), en tenant compte d'au moins un signal de capteur (40) d'au moins un capteur de force d'actionnement de frein (42).

9. Appareil de commande de servofrein (30) selon l'une des revendications 6 à 8, dans lequel l'appareil de commande de servofrein (30) comporte un deuxième raccordement de câble de synchronisation de cadence (48), auquel au moins un câble de synchronisation de cadence (46) est raccordé ou raccordable de sorte que l'appareil de commande de servofrein (30) est connecté ou connectable avec l'appareil de commande hydraulique (28) par le biais du câble de synchronisation de cadence (46).

10. Appareil de commande de servofrein (30) selon la revendication 9, dans lequel l'appareil de commande de servofrein (30) peut être synchronisé avec l'appareil de commande hydraulique (28).

11. Appareil de commande de servofrein (30) selon l'une des revendications 6 à 10, dans lequel la deuxième électronique de commande (30a) peut être commutée depuis un mode normal vers un mode pont lors d'une dégradation de fonction et/ou un dysfonctionnement de l'appareil de commande hydraulique (28), et dans lequel la deuxième électronique de commande (30a) en mode pont est conçue de telle sorte que l'au moins une grandeur de consigne du moteur peut s'établir d'elle-même en tenant compte d'au moins l'au moins une grandeur de force d'actionnement du frein et/ou de l'au moins un signal de capteur (40).

12. Servofrein électromécanique (12) pour un système de freinage doté d'un appareil de commande de servofrein (30) selon l'une des revendications 6 à 11.

13. Servofrein électromécanique (12) selon la revendication 12, dans lequel l'appareil de commande de servofrein (30) est monté dans un capot du moteur (26) du servofrein électromécanique (12).

14. Système de freinage pour un véhicule, doté d'au moins un appareil de commande hydraulique (28) selon l'une des revendications 1 à 4 et d'un appareil de commande de servofrein (30) selon l'une des revendications 6 à 11.

15. Système de freinage selon la revendication 14, dans lequel l'appareil de commande hydraulique (28) ou le groupe hydraulique (10) équipé de celui-ci comporte au moins un premier boîtier (28b), dans et/ou sur lequel est intégrée au moins la première électronique de commande (28a), et dans lequel l'appareil de commande de servofrein (30) ou le servofrein électromécanique (12) équipé de celui-ci comporte au moins un deuxième boîtier (12a), auquel est intégrée au moins la deuxième électronique de commande (30a).
